# EUROPEAN PATENT APPLICATION

(11) **EP 4 180 284 A1**
(43) Date of publication of application: **17.05.2023**
(21) Application number: 21208095.6
(22) Date of filing: 12.11.2021
(51) Int. Cl.: B60T 1/06, B60T 13/10, B60T 13/26, B60T 13/36, F16D 55/00, F16D 55/02, F16D 55/10, F16D 55/18, F16D 55/224, F16D 55/225, F16D 55/226

(54) **BRAKE ASSEMBLY AND VEHICLE**

(71) Applicant: KNORR-BREMSE Systeme für Nutzfahrzeuge GmbH, 80809 München (DE)
(72) Inventor: PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); NAKAMURA, Tatsuro, 1027 Budapest (HU); HOLLOSI, Mate, 1097 Budapest (HU)

(57) **Abstract**

The present invention relates to a brake assembly (1), comprising:
a brake member assembly (2) comprising a first brake member (2a) and a second brake member (2b), each of the first brake member (2a) and the second brake member (2b) being rotationally supported about a rotational axis (R) and opposed to each other in the axial direction with respect to the rotational axis (R),
at least one first braking member (3a) arranged on a radial surface side of the first brake member (2a) with respect to the rotational axis (R),
at least one second braking member (3b) arranged on a radial surface side of the second brake member (2b) with respect to the rotational axis (R),
at least one brake member transmission assembly (5a, 5b, 51a, 51b, 6, 6a', 6b', 6a", 6b") configured to move a surface of the at least one first braking member (3a) facing the radial surface of the first brake member (2a) towards the radial surface of the first brake member (2a) and a surface of the at least one second braking member (3b) facing the radial surface of the second brake member (2b) towards the radial surface of the second brake member (2b), and
at least one brake member transmission assembly driving assembly (4a, 4a', 4a", 4b, 4b', 4b"),
wherein the at least one brake member transmission assembly driving assembly (4a, 4a', 4a", 4b, 4b', 4b") is configured to drive the at least one brake member transmission assembly (5a, 5b, 51a, 51b, 6, 6a', 6b', 6a", 6b") for a bidirectionally driven axial movement of the surface the at least one first braking member (3a) facing the radial surface of the first brake member (2a) towards the radial surface of the first brake member (2a) and the surface of the at least one second braking member (3b) facing the radial surface of the second brake member (2b) towards the radial surface of the second brake member (2b).

## Description

The present invention relates to a brake assembly and a vehicle comprising such brake assembly.

In today's commercial vehicles usually a pneumatic actuated disc brake is used as a mechanical friction brake. The disc brake is containing a disc with an attached brake caliper including brake pads and a pneumatic actuator unit. Once the pneumatic actuator is pressurized, a piston inside the actuator is pressing the brake pads inside the caliper from both sides onto the brake disc, for example, via a lever system. Further cooling channels are mounted between the friction surfaces in a brake disc.

Such disc brake assemblies require a lot of installation space. Especially the installation space of upcoming E-axles for electrically driven vehicles, such as electrically driven trucks, may get in conflict with the installation space of components of today's disc brake.

Therefore, it is an object of the present invention to provide a brake assembly and a vehicle with such brake assembly capable of providing a reduced installation space required for the brake assembly.

The object is solved by the subject matter of the independent claims. Further aspects of the present invention are subject to the dependent claims.

According to the present invention, a brake assembly comprises a brake member assembly comprising a first brake member and a second brake member, each of the first brake member and the second brake member being rotationally supported about a rotational axis and opposed to each other in the axial direction with respect to the rotational axis. The brake assembly further comprises at least one first braking member arranged on a radial surface side of the first brake member with respect to the rotational axis, at least one second braking member arranged on a radial surface side of the second brake member with respect to the rotational axis, at least one brake member transmission assembly configured to move a surface of the at least one first braking member facing the radial surface of the first brake member towards the radial surface of the first brake member and a surface of the at least one second braking member facing the radial surface of the second brake member towards the radial surface of the second brake member, and at least one brake member transmission assembly driving assembly. The at least one brake member transmission assembly driving assembly is configured to drive the at least one brake member transmission assembly for a bidirectionally driven axial movement of the surface the at least one first braking member facing the radial surface of the first brake member towards the radial surface of the first brake member and the surface of the at least one second braking member facing the radial surface of the second brake member towards the radial surface of the second brake member.

According to a preferred embodiment, the first and second brake member form are spaced apart in axial direction, wherein the first and second braking member are arranged in the space between the first and second brake member. Further preferably, the radial surface of the first brake member and the radial surface of the second brake member face each other.

The brake member assembly comprising the first brake member and the second brake member may, for example, provide a double disc brake assembly with the first brake member as first brake disc and the second brake member as second brake disc. In such configuration the first and second brake members extend in the radial direction with respect to the rotational axis.

Preferably, the first brake member and the second brake member extend in the radial direction in parallel to each other, i.e. the distance between first brake member and the second brake member is substantially constant or the radial extension of the first brake member is symmetric to the radial extension of the second brake member.

To apply a braking force on the first brake member, the brake assembly comprises the at least one first braking member arranged on a radial surface side of the first brake member with a surface of the at least one first braking member facing the radial surface side of the first brake member. Correspondingly, to apply a braking force on the second brake member, the brake assembly comprises the at least one second braking member arranged on a radial surface side of the second brake member with a surface of the at least one second braking member facing the radial surface side of the second brake member. Each of the first braking member and the second braking member is configured to be directionally movable in the axial direction with respect to the rotational axis. A braking force is applied to the first brake member by moving the at least one first braking member in the axial direction towards the first brake member, and the braking force is released by a respective reverse movement by the at least one first braking member axially away from the first brake member. The same applies analogously for the second brake member, i.e. a braking force is applied to the second brake member by moving the at least one second braking member in the axial direction towards the second brake member, and the braking force is released by a respective reverse movement by the at least one second braking member axially away from the second brake member. Preferably, the first braking member and/or the second braking member is/are kept rotationally stationary, i.e. is/are supported to only provide an axial movement, to avoid a self-amplifying effect by the brake assembly.

To actuate the at least one first braking member to axially move towards the first brake member and the at least one second braking member to axially move towards the second brake member, the brake assembly comprises the at least one brake member transmission assembly and the at least one brake member transmission assembly driving assembly. The at least one brake member transmission assembly is driven by the at least one brake member transmission assembly driving assembly for a bidirectionally driven axial movement of the at least one first braking member towards the first brake member and the at least one second braking member towards the second brake member. The bidirectionally driven movement of the at least one first braking member and the at least one second braking member differs from the at least one first and second braking members being axially movable as such in that the bidirectionally driven movement relates to a concrete actuation by the at least one brake member transmission assembly. In other words, the at least one brake member transmission assembly is effective on the at least one first braking member in the axial direction towards the first brake member and simultaneously effective on the at least one second braking member in the axial direction towards the second brake member.

Accordingly, a simultaneous braking effect of the at least one first braking member with respect to a braking effect of the at least one second braking member is independent of the at least second braking member. In turn, simultaneous braking effect of the at least one second braking member with respect to a braking effect of the at least one first braking member is independent of the at least one first braking member. The at least one first braking member and the at least one second braking member are therefore directly actuatable by the at least one brake member transmission assembly independent of each other. A relative movement of the at least one first braking member and the at least one second braking member in the axial direction is therefore only initiated by the at least one brake member transmission assembly and not in response of a movement of the respective other one of the at least one first or second braking member. Further, a relative movement of the at least one first braking member with respect to the at least one second braking member, or vice versa, is not required.

In some embodiments, the at least one brake member transmission assembly driving assembly is at least partially axially arranged between the first brake member and the second brake member with respect to the rotational axis.

Since the at least one brake member transmission assembly driving assembly is at least partially arranged between the first brake member and the second brake member in the axial direction with respect to the rotational axis, the installation space in the axial direction may be reduced compared with an arrangement outside the first and second brake members. In other words, the at least one brake member transmission assembly driving assembly is at least partially accommodated by the brake member assembly.

The at least axial arrangement of the at least one brake member transmission assembly driving assembly may be represented by a longitudinal axis in the axial direction in parallel to the rotational axis of the first brake member and the second brake member, respectively. However, the axial arrangement of the at least one brake member transmission assembly driving assembly may be represented by a longitudinal axis in the axial direction inclined with respect to the rotational axis of the first brake member and the second brake member, respectively.

In some embodiments, in the axial direction with respect to the rotational axis, the at least one first braking member is arranged between the at least one brake member transmission assembly and the first brake element, and the at least one second braking member is arranged between the at least one brake member transmission assembly and the second brake element.

The at least one first braking member may be directly arranged between the at least one brake member transmission assembly and the first brake element. However, there may be also an indirect arrangement of the at least one first braking member in terms of intermediate members configured to transfer an axial actuation and disposed between the at least one first braking member and the brake member transmission assembly and/or the at least one first braking member and the first brake member. The same principles of a direct or indirect arrangement applies to the at least one second braking member.

According to the arrangement of the at least one first braking member between the at least one brake member transmission assembly and the first brake element, and the at least one second braking member between the at least one brake member transmission assembly and the second brake element, the brake member transmission assembly is effective on the at least one first braking member and the at least one second braking member to increase the distance between the at least one first braking member and the at least one second braking member in the axial direction to move each of the at least one first braking member and the at least one second braking member to the respective first and second brake member.

Further, since the at least one first braking member, the at least one second braking member and the at least one brake member transmission assembly are at least partially arranged between the first brake member and the second brake member, an installation space required in an axial direction may be reduced.

In some embodiments, the at least one brake member transmission assembly is configured to convert a rotational movement of the at least one brake member transmission assembly driving assembly into a bidirectional translational axial movement of the surface the at least one first braking member facing the radial surface of the first brake member towards the radial surface of the first brake member and the surface of the at least one second braking member facing the radial surface of the second brake member towards the radial surface of the second brake member.

For example, the at least one brake member transmission assembly or a brake member transmission driving member thereof is rotatably supported about a brake member transmission rotational axis. Preferably, the brake member transmission assembly rotational axis is in parallel to the rotational axis of the rotational axis of the first brake member and the second brake member, more preferably coaxially with the rotational axis of the rotational axis of the first brake member and the second brake member.

In accordance with the at least one brake member transmission assembly or a brake member transmission driving member thereof providing a rotational movement that is converted into a bidirectional translational axial movement of the at least one first braking member and the at least one second braking member, a bidirectional stroke member, such as a piston or the like, acting in the axial direction and provided by the brake member transmission assembly may be omitted to reduce the installation space in the axial direction and/or complexity to achieve a compact design. However, the brake member transmission may, alternatively or in addition, provide a translational movement to actuate the at least one first braking member and the at least one second braking member.

The brake member transmission assembly may be an annular ring assembly extending circumferentially about the brake member transmission assembly rotational axis, preferably about the rotational axis of the first brake member and the second brake member, more preferably coaxially with the rotational axis of the first brake member and the second brake member. The brake member transmission assembly may also be an annular ring segment assembly representing only a portion of the annular ring assembly in the circumferential direction.

In some embodiments, the at least one brake member transmission assembly comprises a bidirectional ball-ramp transmission mechanism, comprising at least one first ball and at least one second ball, wherein, in the axial direction with respect to the rotational axis, the at least one first ball is arranged between a brake member transmission and the at least one first braking member, and the at least one second ball is arranged between the brake member transmission and the at least one second braking member, and wherein the surface of the brake member transmission facing the at least one first ball and/or the surface of the at least one first braking member facing the at least one first ball, and the surface of the brake member transmission facing the at least one second ball and/or the surface of the at least one second braking member facing the at least one second ball provide(s) a ball track.

Accordingly, the bidirectional ball-ramp transmission mechanism actuates the at least one first ball and the at least one second ball to move apart from each other in the axial direction for a bidirectional movement of the at least one first braking member and the at least one second braking member to move towards the first brake member and the second brake member respectively assigned thereto.

Therefore, the surface of the at least one brake member transmission facing the at least one first braking member comprises at least one ball track assigned to the at least one first ball. Alternatively or in addition, the surface of the at least one first braking member facing the at least one brake member transmission comprises at least one ball track assigned to the at least one first ball. The same applies for an actuation of the at least one second braking member, i.e. the surface of the at least one brake member transmission facing the at least one second braking member comprises at least one ball track assigned to the at least one second ball. Alternatively or in addition, the surface of the at least one second braking member facing the at least one brake member transmission comprises at least one ball track assigned to the at least one second ball.

Each of the above ball tracks - to the extent provided by the brake assembly - extend in the circumferential direction with an increasing depth or decreasing depth dependent on the viewing angle in the axial direction. The depth may be also increasing and decreasing in alternating portions to return an axial movement by further rotation of the brake member transmission. In dependence of the number of first and second balls, there may be a plurality of ball tracks along a circumferential direction and/or a radial direction.

In some embodiments, the at least one brake member transmission assembly comprises at least one first ball retainer retaining the at least one first ball and at least one second ball retainer retaining the at least one second ball, wherein, in the axial direction with respect to the rotational axis, the at least one first ball retainer is arranged between the brake member transmission and the at least one first braking member, and the at least one second ball retainer is arranged between the brake member transmission and the at least one second braking member.

The first and/or second ball retainer may be an annular ring ball retainer extending circumferentially about the brake member transmission assembly rotational axis, preferably about the rotational axis of the first brake member and the second brake member, more preferably coaxially about the rotational axis of the first brake member and the second brake member. The first and/or second ball retainer may also be an annular ring segment assembly representing only a portion of the annular ring ball retainer in the circumferential direction.

In some embodiments, the at least one first ball retainer and/or the at least one first ball is axially moveable with respect to the rotational axis, and the at least one second ball retainer and/or the at least one second ball is axially moveable with respect to the rotational axis.

Accordingly, for an axial actuation of the at least one first braking member and the at least one second braking member, the at least one first ball retained in the at least one first ball retainer and/or the at least one second ball retained in the second ball retainer may be movable in the axial direction relative to the respective first and/or second ball retainer. In other words, the at least one first ball and the at least one second ball retained in the respective first and/or second ball retainer are retained with sufficient clearance or movement ability within the respective first and/or second ball retainer to follow the respective ball track or ball tracks assigned thereto for an axial movement. Alternatively or in addition, the axial movement of the first and second balls maybe provided by the respective first and/or second ball retainer being axially moveable, e.g. as supported by a corresponding bearing or slide.

In some embodiments, the at least one brake member transmission assembly driving assembly drives the brake member transmission and/or the at least one first ball retainer in a circumferential direction with respect to the rotational axis, preferably coaxially about the rotational axis, to provide a relative movement between the brake member transmission and the at least one first ball retainer, and wherein the at least one brake member transmission assembly driving assembly drives the brake member transmission and/or the at least one second ball retainer in a circumferential direction with respect to the rotational axis, preferably coaxially about the rotational axis, to provide a relative movement between the brake member transmission and the at least one second ball retainer.

For example, an annular ring brake member transmission as the at least one brake member transmission is driven by the at least one brake member transmission assembly driving assembly to rotate about the brake member transmission assembly rotational axis and thereby in a circumferential direction with respect to the rotational axis of the first brake member and the second brake member. In such configuration, the ball tracks for the at least one first ball and the at least one second ball may be provided at least by the respective surfaces of the brake member transmission facing the at least one first braking member and the at least one second braking member, respectively. Accordingly, when the brake transmission is rotated by the at least one brake member transmission assembly driving assembly in a circumferential direction with the ball tracks providing a decreasing depth in the axial direction, the at least one first ball and the at least one second ball are bidirectionally driven to move apart from each other in the axial direction.

As an alternative example, the at least one first ball retainer and the at least one second ball retainer as annular ring ball retainers may be driven by the at least one brake member transmission assembly driving assembly to rotate about the brake member transmission assembly rotational axis and thereby in a circumferential direction with respect to the rotational axis of the first brake member and the second brake member. In such configuration, the ball tracks for the at least one first ball and the at least one second ball may be provided at least by the respective surfaces of the brake member transmission facing the at least one first braking member and the at least one second braking member, respectively, and/or by the respective at least one first braking member and the at least one second braking member. Accordingly, when the at least one first and second ball retainers are rotated by the at least one brake member transmission assembly driving assembly in a circumferential direction with the ball tracks providing a decreasing depth in the axial direction, the at least one first ball and the at least one second ball are bidirectionally driven to move apart from each other in the axial direction. The decreasing depth may be provided by one ball track assigned to the respective at least one first or second ball or, in a configuration with ball tracks provided by the brake member transmission as well as by the respective at least one first or second braking member, as a total depth of facing ball tracks.

As a further example, the brake member transmission as well as at least one of the at least one first and second ball retainers may be driven by the at least one brake member transmission assembly driving assembly to rotate about the brake member transmission assembly rotational axis and thereby in a circumferential direction with respect to the rotational axis of the first brake member and the second brake member to provide a respective relative movement of the transmission member with respect to the at least one first and second ball retainer for a bidirectionally driven axial movement of the at least one first braking member and the at least one second braking member.

In some embodiments, the at least one brake member transmission assembly driving assembly comprises at least one driving member and at least one driving member transmission rotationally driven by the at least one driving member, preferably about a driving member rotational axis substantially in parallel with the rotational axis.

The driving member transmission rotationally driven by the at least one driving member is configured to be operatively connected to the brake member transmission assembly, e.g. to drive the transmission member and/or at least one of the at least one first and second ball retainers in accordance with a rotational movement of the driving member. The driving member transmission may also only be in an operative connection or operative engagement with the brake member transmission assembly over a predetermined range of rotational angles of the driving member.

Preferably, the driving member is formed as a rod-like member, such as a shaft, to extend in an axial direction with respect to the brake transmission assembly rotational axis and/or the rotational axis of the first brake member and the second brake member, preferably in parallel to such respective axis. Such driving member may be rotationally driven to drive the driving member transmission. Alternatively, the driving member may be an electric motor as direct drive. In a further variant, the driving member may be translationally driven with the translational movement of the driving member being converted in a rotational movement of the driving member transmission.

The driving member transmission may be integrally formed with the driving member or otherwise attached thereto, e.g. firmly bonded thereto or connected by a form-fit and/or force-fit connection. With the driving member being rotationally driven, the driving member transmission preferably extends circumferentially around the driving member in the radial direction with respect to the driving member rotational axis.

In some embodiments, the at least one driving member extends beyond the first brake member and/or the second brake member in the axial direction with respect to the rotational axis.

In other words, the at least one driving member is accessible from an outside of the first and/or second brake members with respect to the axial direction. Accordingly, a drive for driving the driving member may be also disposable on the respective outside of the first and second brake members.

In some embodiments, the brake assembly comprises at least one driving member driving lever configured to drive the driving member. Preferably, the at least one driving member driving lever is actuated by a pneumatic, hydraulic or electro-mechanic actuator.

Preferably, the at least one driving member driving lever is configured to drive the driving member rotationally about the driving member rotational axis. For example, the driving member is driven by at least one driving member driving lever, wherein the at least one driving member driving lever is rotatably supported about a respective driving member driving lever rotational axis. To transfer the rotational movement of the driving member driving to the driving member, the driving member driving lever may be operatively connected to the driving member, e.g. by being integrally formed with the driving member or connected thereto by a form-fit and/or force-fit connection. The driving member driving lever may also be operatively connected to the driving member via intermediate transmission means. Accordingly, the term operatively connected relates to a constant connection or engagement of the driving member driving lever with the driving member. In turn, the term operatively engageable relates to a configuration where the driving member driving lever may be disengaged from the driving member under certain predetermined circumstances. For example, the driving member driving lever may have to provide a certain predetermined rotational and/or translational movement to operatively engage with the driving member directly or indirectly to transfer a further rotational movement to the driving member. This may be advantageous to decouple the driving member driving lever and the driving member for the avoidance of unintentional slight braking actions, e.g. due to vibrations.

Preferably, the driving member driving lever rotational axis of the at least one driving member driving lever operatively connected to the driving member or operatively engaged therewith corresponds to the driving member rotational axis, i.e. the driving member driving lever rotational axis is coaxially aligned with the driving member rotational axis. Alternatively, the driving member driving lever rotational axis may be offset from the driving member rotational axis. Such offset may provide a parallel arrangement of the driving member driving lever rotational axis and the driving member rotational axis or a skewed arrangement or an arrangement with the driving member driving lever rotational axis intersecting the driving member rotational axis. Such offset may allow the implementation of intermediate transmission means, such as gears as described later, to provide a predetermined transmission ratio with respect to the rotational movement of the at least one driving member driving lever and the corresponding movement of the at least one driving member.

As the at least one driving member driving lever transfers its rotational movement into a rotational movement of the at least one driving member, the installation space of the brake assembly may be at least reduced in an axial direction with respect to the driving member driving lever rotational axis and the driving member rotational axis. In other words, the extension of the at least one driving member driving lever and the at least one driving member in the respective axial directions may be designed with respect to stability criteria and/or to bridge distances required for respective functional interactions but does not have to consider translational movement extension length in such directions.

In some embodiments, the at least one driving member driving lever comprises at least one driving member driving lever transmission member, preferably at least one driving member driving lever gear, and the at least one driving member comprises at least one driving member transmission receiving member, preferably at least one driving member gear in accordance with a predetermined transmission ratio.

As already addressed with respect to the driving member driving lever rotational axis not being coaxially arranged with the driving member rotational axis, the at least one driving member driving lever comprises at least one driving member driving lever transmission member to transmit an actuation of the at least one driving member driving lever to at least one driving member transmission receiving member with a predetermined transmission ratio, preferably of more than 1. However, the transmission ration may be also less than 1. The driving member driving lever transmission member may be non-rotatably attached to or comprised by the at least one driving member driving lever to directly rotate in accordance with a rotation of the at least one driving member driving lever.

Preferably, the at least one driving member driving lever transmission member is configured as or comprises at least one driving member driving lever gear. The at least one driving member driving lever gear may be a spur gear with the teeth extending circumferentially in a radial direction with respect to the driving member driving lever rotational axis. Correspondingly, the at least one driving member transmission receiving member may be at least one driving member gear, for example a corresponding spur gear, with the teeth extending in a plane to engage with the teeth of the at least one driving member driving lever gear. The diameter or number of teeth, respectively, of at least one driving member driving lever gear and the at least one driving member gear are selected as per the transmission ratio to be achieved.

In some embodiments, the brake assembly further comprises at least one driving member driving lever actuating assembly configured to drive the at least one driving member driving lever about the driving member driving lever rotational axis.

The at least one driving member driving lever actuating assembly configured to drive the at least one driving member driving lever about the driving member driving lever rotational axis may be, for example, an electric motor or another type of rotary drive to rotate the at least one driving member driving lever about the driving member driving lever rotational axis. Alternatively, the at least one driving member driving lever actuating assembly may be a translational driving device configured to pull or push the at least one driving member driving lever to rotate about the driving member driving lever rotational axis.

In some embodiments, the at least one driving member driving lever actuating assembly comprises a piston actuator, comprising at least one driving member driving lever actuator piston with one end configured to drive the at least one driving member driving lever and the other end forming a driving member driving lever actuator piston area configured to be guided in a driving member driving lever actuator piston cylinder.

Accordingly, the at least one driving member driving lever actuating assembly comprises the piston actuator as translational driving device to rotationally drive the at least one driving member driving lever about the driving member driving lever rotational axis by being pulled or pushed by the piston actuator. The piston actuator comprises at least one driving member driving lever actuator piston, preferably pneumatically, hydraulically or electrically driven, to drive the at least one driving member driving lever in accordance with a relative movement of the at least one driving member driving lever actuator piston with respect to the driving member driving lever actuator piston cylinder. For such relative movement, the driving member driving lever actuator piston provides a longitudinal extension corresponding to a translational movement direction with a driving member driving lever actuator piston area extending radially therefrom. The driving member driving lever actuator piston area guides the driving member driving lever actuator piston within the driving member driving lever actuator piston cylinder in the translational movement direction. The driving member driving lever actuator piston area may be further configured to separate the inner volume of the driving member driving lever actuator piston cylinder in a first volume with the driving member driving lever actuator piston at least partially extending therein and a second volume opposed thereto in the translational movement direction.

For example, the second volume may be pressurized to move the driving member driving lever actuator piston in an extended position in the translational movement direction. In turn, the first volume may be pressurized to move the driving member driving lever actuator piston in a retracted position in the translational movement direction.

In some embodiments, the at least one driving member driving lever actuating assembly comprises at least one driving member driving lever actuator biasing member configured to bias the at least one driving member driving lever actuator piston in a retracted position decreasing the distance between the driving member driving lever actuator piston cylinder of the at least one driving member driving lever actuating assembly and the at least one driving member driving lever. Alternatively, the at least one driving member driving lever actuator biasing member may be configured to bias the at least one driving member driving lever actuator piston in an extended position increasing the distance between the driving member driving lever actuator piston cylinder of the at least one driving member driving lever actuating assembly and the at least one driving member driving lever.

Accordingly, instead of or alternatively to, for example, pressurizing the first and second volume of the driving member driving lever actuator piston cylinder for a bidirectional movement of the driving member driving lever actuator piston, a driving member driving lever actuator biasing member may be arranged in the first and/or second volume acting in the translational movement direction.

For example, the driving member driving lever actuator biasing member may be a compression spring arranged in the second volume to bias the driving member driving lever actuator piston in the extended position. When the first volume is pressurized up to a resulting force exceeding the counter force of the compression spring, the driving member driving lever actuator piston is moved in the retracted position. In turn, the driving member driving lever actuator biasing member may be a tension spring arranged in the first volume, for example, in operative connection with the driving member driving lever actuator piston area and an opposed portion of the second volume in the translational movement direction to bias the driving member driving lever actuator piston in the extended position. In such configuration, the first volume may be pressurized up to a resulting force exceeding the counter force of the tension spring to move the driving member driving lever actuator piston in the retracted position. If the extended position of the driving member driving lever actuator piston corresponds to a braking action, the above configurations provide a passive braking concept. In other words, the braking action takes place by the at least one driving member driving lever actuator biasing member while the release of such braking action requires the at least one driving member driving lever actuating assembly to be energized, e.g. by pressurization of a respective volume. In turn, if the extended position of the driving member driving lever actuator piston corresponds to a release of a braking action, the above configurations provide an active braking concept. In other words, the braking action takes place by the at least one driving member driving lever actuating assembly to being energized, e.g. by pressurization of a respective volume.

In alternative configurations, the second volume may be energized with the compression spring arranged in the first volume or the tensile spring being arranged in the second volume. Accordingly, the respective driving member driving lever actuator biasing member as compression spring or tensile spring biases the driving member driving lever actuator piston in the retracted position, while energizing, e.g. pressurizing. Consequently, the second volume moves the driving member driving lever actuator piston in the extended position when exceeding the counter force by the driving member driving lever actuator biasing member. In such configurations, the reverse principles with respect to the passive and active braking concepts as described above apply. In other words, if the extended position of the driving member driving lever actuator piston corresponds to a braking action, the alternative configurations provide an active braking concept. In turn, if the retracted position of the driving member driving lever actuator piston corresponds to a braking action, the alternative configurations provide a passive braking concept.

In some embodiments, the brake assembly comprises at least one first driving member driving lever actuating assembly and at least one second driving member driving lever actuating assembly.

For example, the at least one driving member driving lever may thereby be actuated differently depending on the concrete configuration of the at least one first driving member driving lever actuating assembly and at least one second driving member driving lever actuating assembly and/or their concrete arrangement within the brake assembly. However, the at least one driving member driving lever may be actuated substantially the same by the at least one first driving member driving lever actuating assembly and at least one second driving member driving lever actuating assembly for redundancy reasons.

In some embodiments, both of the at least one first driving member driving lever actuating assembly and the at least one second driving member driving lever actuating assembly drive the at least one driving member driving lever, preferably each of which being operatively engageable with or operatively connected to the at least one driving member driving lever in different positions along the at least one driving member driving lever and/or being arranged substantially on different sides of the at least one driving member driving lever.

Here, as in the above example, the at least one first driving member driving lever actuating assembly and at least one second driving member driving lever actuating assembly acting on the same at least one driving member driving lever for different actuating characteristics or redundancy reasons. Specifically, each of the at least one first driving member driving lever actuating assembly and at least one second driving member driving lever actuating assembly are operatively engageable with or operatively connected to the at least one driving member driving lever. The operative connection relates to a continuous direct or indirect connection, while the operative engagement may only be available over a certain range of movement of the respective driving member driving lever actuating assembly or driving member driving lever actuating member, respectively. For example, the first and second driving member driving lever actuating assemblies may be configured as piston actuators as previously described. Accordingly, the driving member driving lever actuator piston of the first and second driving member driving lever actuating assembly may be rotationally affixed to the at least one driving member driving lever for an operative connection thereto. Alternatively, the driving member driving lever actuator piston of the first and second driving member driving lever actuating assembly may comprise a catch member only in engagement with the at least one driving member driving lever over a certain range of movement of the driving member driving lever actuator piston.

To apply different actuating characteristics on the at least one driving member driving lever, each of the at least one first driving member driving lever actuating assembly and the at least one second driving member driving lever actuating assembly is operatively engageable with or operatively connected to the at least one driving member driving lever in different positions along the at least one driving member driving lever. Specifically, the engagement or connection is different in a radial distance between such engagement or connection and the driving member driving lever rotational axis to apply a different effective lever arm. However, the different positions may, alternatively or in addition, relate to a difference in the axial position with respect to the driving member driving lever rotational axis. The axial offset may increase the flexibility of arranging the at least one first driving member driving lever actuating assembly and the at least one second driving member driving lever actuating assembly in view of given installation space constraints.

Alternatively or in addition, each of the at least one first driving member driving lever actuating assembly and the at least one second driving member driving lever actuating assembly is arranged substantially on different sides of the at least one driving member driving lever to further enhance the freedom in arranging the at least one first driving member driving lever actuating assembly and the at least one second driving member driving lever actuating assembly. In this context, the term "substantially" relates to a configuration, where, for example, one end of a driving member driving lever actuator piston of a piston actuator as driving member driving lever actuating assembly may extend beyond the at least one driving member driving lever and may therefore be partially arranged on the same side as the other driving member driving lever actuating assembly. However, the at least one first driving member driving lever actuating assembly and the at least one second driving member driving lever actuating assembly are arranged substantially on different sides of the at least one driving member driving lever, specifically according to the main actuating effective portions of the at least one first driving member driving lever actuating assembly and the at least one second driving member driving lever actuating assembly.

In some embodiments, the braking member actuating assembly comprises at least one first driving member driving lever operatively connected to or operatively engageable with the at least one driving member and configured to be driven by the at least one first driving member driving lever actuating assembly and at least one second driving member driving lever operatively connected to or operatively engageable with the at least one driving member and configured to be driven by the at least one second driving member driving lever actuating assembly. Preferably, the at least one first driving member driving lever and the at least one second driving member driving lever forming an angle equal to or less than 180°, in particular an acute angle, therebetween with the at least one first driving member driving lever actuating assembly and with the at least one second driving member driving lever actuating assembly being substantially arranged on the opposite side outside the angle formed by the at least one first driving member driving lever and the at least one second driving member driving lever. Alternatively or in addition, the at least one first driving member driving lever actuating assembly and the at least one second driving member driving lever actuating assembly are preferably operatively engageable with the at least one first driving member driving lever and the at least one second driving member driving lever in different radial distances from the driving member rotational axis.

Accordingly, the at least one driving member is rotatably drivable about the driving member rotational axis by the at least one first driving member driving lever via the at least one first driving member driving lever actuating assembly and by the at least one second driving member driving lever via the at least one second driving member driving lever actuating assembly.

In a configuration with the at least one first driving member driving lever and the at least one second driving member driving lever forming an angle equal to or less than 180°, in particular an acute angle, therebetween and the at least one first driving member driving lever actuating assembly and with the at least one second driving member driving lever actuating assembly being substantially arranged on the opposite side outside the angle, a compact arrangement can be established. In this context, the term "substantially" also relates to an arrangement wherein some components of the respective driving member driving lever actuating assembly may partially extend within the angle but without significant effect on the functionality or at least with the majority of the driving member driving lever actuating assembly being arranged outside the angle.

For example, with a first piston actuator and the at least one first driving member driving lever actuating assembly and a second piston actuator and the at least one second driving member driving lever actuating assembly, the respective first and second driving member driving lever actuating assemblies may also form an angle of equal to or less than 180°, preferably an acute angle, represented by the respective translational movement directions. The angles between the at least one first and second driving member driving levers and the at least one first and second driving member driving lever actuating assemblies are opened to opposed sides so that at least the compact design of the braking member actuating assembly may be achieved in a radial direction with respect to the driving member rotational axis.

Alternatively or in addition, the at least one first driving member driving lever actuating assembly and the at least one second driving member driving lever actuating assembly are preferably operatively engageable with the at least one first driving member driving lever and the at least one second driving member driving lever in different radial distances from the driving member rotational axis. Accordingly, different actuating characteristics or transmission characteristics, respectively, may be achieved, specifically with respect to corresponding lever arms.

The at least one first and second driving member driving levers may also be offset from each other in the axial direction with respect to the driving member driving lever rotational axis.

In some embodiments, the at least one first driving member driving lever and the at least one second driving member driving lever are operatively engaged with the at least one driving member in a constant positional relationship to each other or relatively moveable with respect to each other.

While the at least one first driving member driving lever and the at least one second driving member driving lever are operatively engaged with the at least one driving member in a constant positional relationship to each other, constructive efforts may be reduced. Furthermore, a constant positional relationship may allow to use the respective other driving member driving lever actuating assembly as return assembly. For example, if the at least one driving member is moved in one rotational direction about the driving member rotational axis by the at least one first driving member driving lever via the at least one first driving member driving lever actuating assembly, the at least one second driving member driving lever is also moved in such direction due to the constant positional relationship. If the at least one second driving member driving lever is operatively connected to the at least one second driving member driving lever actuating assembly, the at least one second driving member driving lever actuating assembly may allow the driving member to return in the opposite rotational direction. Specifically, the constant positional relationship of the at least one first and second driving member driving levers may allow to automatically bias one of the first and second driving member driving lever actuating assemblies, such as a spring-loaded piston actuator, to at least partially reverse a rotation of the driving member being rotated by the other one of the first and second driving member driving lever actuating assemblies.

However, to avoid the above interaction or to enhance flexibility, the at least one first and second driving member driving levers may be independently moveably with respect to each other.

In alternative embodiments, the at least one first driving member driving lever actuating assembly is configured to drive the at least one driving member driving lever as previously described or the at least one first driving member driving lever as previously described in a braking direction when energized, preferably by pushing or pulling the at least one driving member driving lever or the at least one first driving member driving lever. Further, the at least one second driving member driving lever actuating assembly is configured to drive the at least one driving member driving lever as previously described or the at least one second driving member driving lever as previously described in a braking direction when de-energized, preferably by pulling or pushing the at least one driving member driving lever or the at least one first driving member driving lever.

Analogously to the description of the passive and active braking concept principles, the at least one first driving member driving lever actuating assembly provides an active braking concept by being configured to drive the at least one driving member driving lever or the at least one first driving member driving lever in a braking direction when energized. Driving the at least one driving member driving lever or the at least one first driving member driving lever in a braking direction is preferably executed by pushing or pulling the at least one driving member driving lever or the at least one first driving member driving lever, e.g. by the piston actuator as previously described.

Further, the at least one second driving member driving lever actuating assembly being configured to drive the at least one driving member driving lever or the at least one second driving member driving lever in a braking direction when de-energized provides a passive braking concept.

With respect to pulling or pushing the at least one driving member driving lever or the at least one first or second driving member driving lever, the at least one first driving member driving lever actuating assembly may be configured to provide a pulling action, while the at least one second driving member driving lever actuating assembly may be configured to provide a pushing action, or vice versa.

In some embodiments, the transmission ratio of the at least one first driving member driving lever actuating assembly on the at least one driving member is different from the transmission ratio of the at least one second driving member driving lever actuating assembly on the at least one driving member. Preferably, the transmission ratio by the at least one first driving member driving lever actuating assembly on the at least one driving member is less than the transmission ratio of the at least one second driving member driving lever actuating assembly on the at least one driving member.

Accordingly, the at least one first driving member driving lever actuating assembly may be designed differently from the at least one second driving member driving lever actuating assembly to provide the same actuation of the at least one first and second braking members or may provide a different actuation by the same design.

Alternatively, the driving member may be driven by an electric motor or another direct drive.

In some embodiments, the at least one driving member transmission comprises a gear driving member transmission, a control slide driving member transmission or a cam driving member transmission.

The gear driving member transmission may be a spur gear rotationally driven about the driving member transmission rotational axis, preferably the driving member rotational axis. The control slide driving member transmission may be a wedge rotationally driven about the driving member transmission rotational axis, preferably the driving member rotational axis. The cam driving member transmission may be of circular or elliptical shape eccentrically rotationally driven about or eccentrically positioned to, respectively, the driving member transmission rotational axis, preferably the driving member rotational axis.

In some embodiments, the at least one driving member transmission is the gear driving member transmission and configured to provide the relative movement between the brake member transmission and the at least one first ball retainer and the brake member transmission and the at least one second ball retainer as previously described. Alternatively or in addition, the gear driving member transmission is configured to provide the relative movement between the at least one first ball retainer and the at least one first braking member and the at least one second ball retainer and the at least one second braking member.

For example, the driving member comprises a spur gear as gear driving member transmission extending circumferentially in the radial direction of the driving member transmission rotational axis with the teeth arranged on the outer circumference of the spur gear, i.e. on a circumferential axial surface thereof. The driving member transmission is arranged at a portion of the driving member between the first brake member and the second brake member. The driving member transmission is thereby positioned such that the teeth of the spur gear mesh with corresponding teeth of the brake member transmission facing the teeth of the spur gear. Consequently, the brake member transmission is rotated about the brake member transmission rotational axis, if driven by the driving member transmission due to a rotational movement of the gear driving member transmission. The transmission ratio of the teeth of the spur gear and the brake member transmission in accordance with a respective pairing of respective gears or teeth, respectively, may be preferably less or more than 1, in particular more than 2.

With the driving member transmission driving the brake member transmission, a relative rotational movement between the brake member transmission and the first and/or second ball retainer with respective ball tracks provided by the brake member transmission may cause an axial movement of the respective at least one first and/or second ball. Alternatively, the first and/or second ball retainer may be configured to be rotatable together with the driven brake member transmission with a relative axial movement of the at least one first and/or second balls due to respective ball tracks provided by the respective first and/or second braking member or a respective rotationally stationary intermediate member. In another variant, the first and/or second ball retainers is/are rotationally driven by the driving member transmission to provide a respective relative movement with respect to the respective first and/or second braking members and the brake member transmission.

In some embodiments, the at least one driving member transmission is the control slide driving member transmission with lateral control slide surfaces extending in the radial direction, and wherein preferably the at least one brake member transmission assembly comprises a first brake member transmission member to be movable in the axial direction with respect to the rotational axis towards the first braking member and a second brake member transmission member to be movable in the axial direction with respect to the rotational axis towards the second braking member depending on a rotational angle of the control slide driving member transmission.

The lateral control slide surfaces extend in the radial direction with respect to the driving member transmission rotational axis to provide a control slide for the brake member transmission to be bidirectionally effective on the at least one first braking member and the at least one second braking member to be actuated towards the respective one of the first brake member and the second brake member.

For example, the control slide driving member transmission may be a wedge formed as triangle, preferable an isosceles triangle, with inclined surfaces, preferably the isosceles surfaces, as lateral control slide surfaces extending from a tip of the triangle facing towards the transmission member. The angle of the inclined surfaces increases at least partially over the circumference of the control slide driving member transmission in a circumferential direction with respect to the driving member transmission rotational axis. In such configuration, the brake member transmission may comprise a corresponding control slide driving member transmission receiving portion to be engaged by the lateral control slide surfaces upon a certain rotation of the control slide driving member transmission to be rotated therewith due to a form-fit engagement.

Alternatively or in addition, the lateral control slide surfaces of the control slide driving member transmission may be configured to come or being in contact with a surface of the first brake member transmission member facing away from the at least one first braking member and a surface of the second brake member transmission facing away from the at least one second braking member. Accordingly, in the axial direction with respect to the rotational axis of the first brake member and the second brake member, the first brake member transmission member is arranged between an effective lateral control slide surface and the at least one first braking member. Analogously, in the axial direction with respect to the rotational axis of the first brake member and the second brake member, the second brake member transmission member is arranged between an effective lateral control slide surface and the at least one second braking member. The first and second brake member transmission member are axially moveable with respect to the rotational axis of the first brake member and the second brake member. With the lateral control slide surfaces providing a different thickness in circumferential direction with respect to the driving member transmission rotational axis the first and second brake member transmission member are moveable towards the respective at least one first and second braking members by being moved apart from each other in the axial direction depending on a rotational angle of the control slide driving member transmission.

In some embodiments, the at least one driving member transmission is the cam driving member transmission and the at least one brake member transmission assembly comprises a first brake member transmission lever configured to actuate the first braking member and a second brake member transmission lever configured to actuate the second braking member depending on a rotational angle of the cam driving member transmission.

For example, one end of the first brake member transmission lever may be pivotably connected to the at least one first braking member and the other end of the first brake member transmission lever may be pivotably connected to a brake member transmission lever pivot. Further, one end of the second brake member transmission lever may be pivotably connected to the at least one second braking member and the other end of the second brake member transmission lever may be pivotably connected to the brake member transmission lever pivot. Accordingly, the first brake member transmission lever and the second brake member transmission lever are arranged between the at least one first braking member and the at least one second braking member in the axial direction. In such configuration, the first brake member transmission lever and the second brake member transmission lever provide a toggle lever or knee lever mechanism bidirectionally effective in the axial direction in dependence of the radial position of the brake member transmission lever pivot with respect to the rotational axis of the first and second brake members. The cam driving member transmission may be operatively connected or operatively engageable with the first brake member transmission lever, the second brake member transmission lever and/or the brake member transmission lever pivot to change the radial position of the brake member transmission lever pivot to actuate the at least one first braking member and the at least one second braking member accordingly.

In some embodiments, the brake assembly comprises at least one first transmission protection portion arranged to at least partially shield the at least one brake member transmission assembly from a contact surface of the first brake member and the first braking member and a contact surface of the second brake member and the second braking member on a side of the at least one brake member transmission assembly facing away from the rotational axis in the radial direction. Alternatively or in addition, the brake assembly comprises at least one second transmission protection portion to at least partially shield the at least one brake member transmission assembly from a contact surface of the first brake member and the first braking member and a contact surface of the second brake member and the second braking member on a side of the at least one brake member transmission assembly facing towards the rotational axis in the radial direction.

For example, to protect the driving transmission and the brake member transmission assembly from environmental impacts, such as brake dust or the like, the brake assembly comprises the first transmission protection portion and two second protection portions. The first transmission protection portion may be a ring member with its circumferential extension arranged between the at least one first braking member and the at least one second braking member in the axial direction to allow the brake member transmission assembly to be circumferentially enclosed by the first transmission protection portion from an outer circumference facing away from the rotational axis. The second transmission protection portions may be also configured as annular members extending circumferentially about the rotational axis. The one second transmission portion may be disposed between a driving member carrier and the at least one first braking member. The other second transmission portion may be disposed between the driving member carrier and the at least one second braking member. Accordingly, the second transmission protection portions allow the brake member transmission assembly to be circumferentially sealed by the second transmission protection portions from an inner circumference facing towards the rotational axis.

In some embodiments, the brake member assembly further comprises a connecting member configured to connect the first brake member and the second brake member in a predetermined distance from each other in the axial direction with respect to the rotational axis, preferably as continuous connection over the circumferential extension of the first brake member and the second brake member, more preferably at an outer circumference of the first brake member and the second brake member. Preferably, the connection member comprises increased surface features, such as ribs, and/or the connection member, the first brake member and/or the second brake member comprises or comprise cooling channels.

For example, the first brake member and the second brake member are rotationally supported about the rotational axis and connected to each other by the connecting member to rotate together about the rotational axis R. The connecting member may be a continuous ring member circumferentially extending around the outer circumference of the first brake member and second brake member in a space therebetween in the axial direction with respect to rotational axis. Accordingly, the connecting member provides an outer circumferential cover of the brake disc assembly capable of stiffening the brake member assembly and/or protecting components between the first brake member and the second brake member from environmental impacts from outside the coverage by the first brake member, the second brake member and the connecting member. However, the connecting member may be also discontinuous in terms of providing openings, e.g. for an accessibility of components inside such discontinuous coverage and/or for ventilation, or the connecting member may be comprised of a plurality of separate connecting members. Further, the connecting member may, alternatively or in addition, be arranged at an inner circumference of the first brake member and the second brake member. The connecting member may be connected to the first brake member and the second brake member by being firmly bonded thereto. In alternative embodiments, the connecting member may be connected to the first brake member and the second brake member by a force-fit connection or integrally formed with the first brake member and the second brake member.

To increase a heat convection by the connection member, the connection member preferably comprises increased surface features, such as ribs or other projections or contours. Accordingly, the increased surface features may be any surface features and/or material characteristics directed to an increase of heat convection. Alternatively or in addition, a cooling effect may be increased or supported by cooling channels within the connection member, the first brake member and/or the second brake member.

In another aspect, the present invention relates to a vehicle comprising a brake assembly as previously described, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

The brake assembly is advantageously applied for such vehicles according to the characteristic installation space constraints.

Further advantages, aspects and details of the invention are subject to the claims, the following description of exemplary embodiments applying the principles of the invention, and the respective exemplary drawings.
**Figure 1** is a cross-sectional view of a section of a brake assembly according to an exemplary embodiment of the present invention;
**Figure 2** is a cross-sectional view of an alternative configuration of a driving member transmission and brake member transmission members;
**Figure 3** is a cross-sectional view of a further alternative configuration of a driving member transmission and brake member transmission members; and
**Figure 4** is a lateral view of a brake assembly installed on a vehicle as part of a brake system with the brake assembly of Figure 1 as exemplary embodiment.

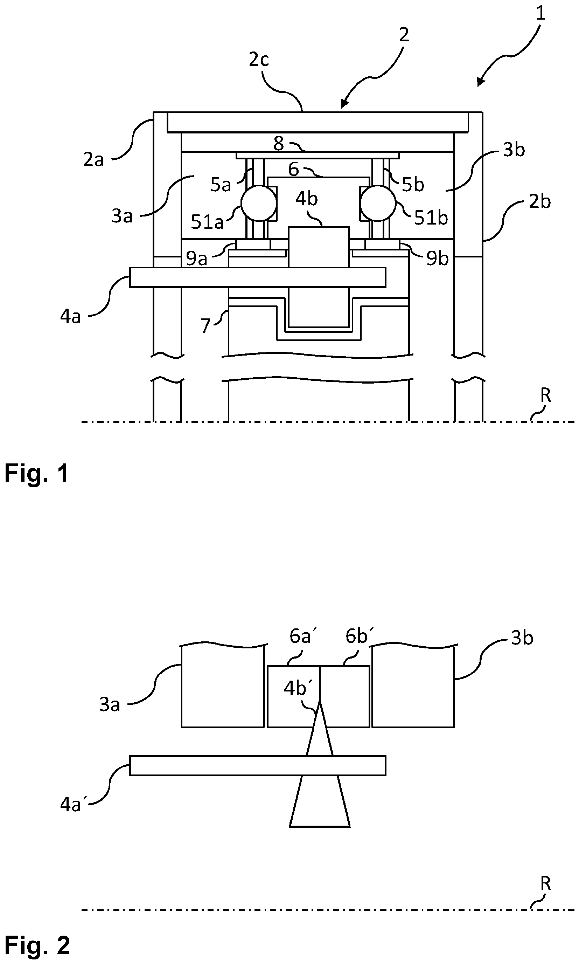

**Figure 1** shows a cross-sectional view of a section of a brake assembly 1 according to an exemplary embodiment of the present invention. The exemplary brake assembly 1 comprises a brake disc assembly 2 as brake member assembly, comprising a first brake disc 2a as first brake member and a second brake disc 2b as second brake member. The first brake disc 2a and the second brake disc 2b are rotationally supported about a rotational axis R and connected to each other by a connecting member 2c to rotate together about the rotational axis R. In the exemplary embodiment, the connecting member 2c is a continuous ring member circumferentially extending around the outer circumference of the first brake disc 2a and second brake disc 2b in a space therebetween in the axial direction with respect to rotational axis R. Accordingly, the connecting member 2c provides an outer cover circumferential cover of the brake disc assembly 2 capable of stiffening the brake disc assembly 2 and/or protecting components between the first brake disc 2a and the second brake disc 2b from environmental impacts from outside the coverage by the first brake disc 2a, the second brake disc 2b and the connecting member 2c. However, in other embodiments, the connecting member 2c may be discontinuous in terms of providing openings, e.g. for an accessibility of components inside such discontinuous coverage and/or for ventilation, or the connecting member may be comprised of a plurality of separate connecting members. In other embodiments, the connecting member 2c may, alternatively or in addition, be arranged at an inner circumference of the first brake disc 2a and the second brake disc 2b. The connecting member 2c is connected to the first brake disc 2a and the second brake disc 2b by being firmly bonded thereto. In alternative embodiments, the connecting member may be connected to the first brake disc 2a and the second brake disc 2b by a force-fit connection or integrally formed with the first brake disc 2a and the second brake disc 2b.

The brake assembly 1 further comprises a first brake pad 3a as at least one first braking member assigned to the first brake disc 2a to apply a braking force thereon and a second brake pad 3b as at least one second braking member assigned to the second brake disc 2b to apply a braking force thereon. Each of the first and second brake pads 3a, 3b is arranged to provide a braking surface extending in a radial direction with respect to the rotational axis R and facing in inner radial surface of the respective first and second brake discs 2a, 2b respectively assigned thereto. In the exemplary embodiment, the first and second brake pads 3a, 3b are stationary with respect to rotational movement relative to the first and second brake discs 2a, 2b, but axially moveable with respect to the rotational axis R. Accordingly, when the first brake pad 3a is axially moved towards the first brake disc 2a, after an initial contact, the first brake pad 3a applies a braking force on the first brake disc. In turn, when the first brake pad 3a is axially moved away from the first brake disc 2a, an applied braking force is released. The same applies for the second brake pad 3b with respect to the second brake disc 2b. In the exemplary embodiment, the first and second brake pads 3a, 3b are configured to only partially extend over a circumferential direction with respect to the rotational axis R. However, in alternative embodiments, the first brake pad 3a and/or the second brake pad 3b may be configured as annular member extending over the whole circumference of the first brake disc 2a and/or the second brake disc 2b, preferably coaxially to the rotational axis R.

To apply a braking force on the first and second brake discs 2a, 2b due to an axial movement of the first and second brake pads 3a, 3b, the brake assembly 1 comprises a brake member transmission assembly. The brake member transmission assembly in the exemplary embodiment comprises a first ball retainer 5a with a first ball 51a retained therein, a second ball retainer 5b with a second ball 51b retained therein, and a brake member transmission 6 arranged between the first ball retainer 5a and the second ball retainer 5b in the axial direction with respect to the rotational axis R. The brake member transmission 6 provides a first ball track on a radial surface facing the ball 51a and a second ball track on a radial surface facing the ball 51b. The first ball retainer 5a, the second ball retainer 5b and the brake member transmission 6 are ring-shaped and extend around the rotational axis R coaxially thereto. Due to the annular arrangement, the first ball retainer 5a and/or the second ball retainer 5b may also comprise a plurality of respective first and second balls, 51a, 51b. Accordingly, the brake member transmission 6 may provide a respective length of the first and second ball tracks in the circumferential direction or may provide a respective plurality of first and second ball tracks. In the exemplary embodiment, the brake member transmission assembly provides a ball-ramp mechanism with the brake member transmission 6 being rotationally driven about the rotational axis R to move the first ball 51a and the second ball 51b in the axial direction in accordance with the actual depth of the respective ball track in the axial direction. Accordingly, the first ball 51a and the second ball 51b are retained in respectively stationary first and second ball retainers 5a, 5b with respect to a rotational movement. The first ball 51a and the second ball 51b are retained in the first and second ball retainers 5a, 5b to be movable in the axial direction. In other embodiments, the axial movement of the first and second balls 51a, 51b may, alternatively or in addition, be provided by the respective first and/or second ball retainers 5a, 5b being axially moveable.

To move the first and second ball tracks relatively to the first and second balls 51a, 51b, the brake assembly 1 comprises the braking member actuating assembly 4. The driving member 4a of the braking member actuating assembly 4 extends in the axial direction in parallel to the rotational axis R from an outside of the brake disc assembly 2, here from an outside of the radial surface of the first brake disc 2a facing away from the second brake disc 2b, into the axial space provided between the first brake disc 2a and the second brake disc 2b. The driving member 4a comprises a driving member transmission 4b, here, a spur gear extending circumferentially in the radial direction with the teeth arranged on the outer circumference of the spur gear, i.e. on a circumferential axial surface thereof. The driving member transmission 4b is arranged at a portion of the driving member 4a extending inside the brake disc assembly 2, i.e. in the space between the first brake disc 2a and the second brake disc 2b. The driving member transmission 4b is thereby positioned such that the teeth of the spur gear mesh with corresponding teeth of the brake member transmission 6 facing the teeth of the spur gear. Consequently, the brake member transmission 6 is rotated about the rotational axis R, if driven by the driving member transmission 4b due to a rotational movement of the driving member 4a.

The driving member 4a comprising the driving member transmission 4b is rotatably supported within a driving member carrier 7 partially enclosing the driving member 4a and the driving member transmission 4b in the axial direction with an opening to allow the driving member transmission 4b to drive the brake member transmission 6. To protect the driving transmission 4b and the brake member transmission assembly from environmental impacts, such as brake dust or the like, the brake assembly 1 comprises a first transmission protection portion 8 and two second protection portions 9a, 9b. The first transmission protection portion 8 is a ring member with its circumferential extension arranged between the first brake pad 3a and the second brake pad 3b in the axial direction to allow the brake member transmission assembly to be circumferentially enclosed by the first transmission protection portion 8 from an outer circumference facing away from the rotational axis R. The second transmission protection portions 9a, 9b are also configured as annular members extending circumferentially about the rotational axis R. The one second transmission portion 9a is disposed between the driving member carrier 7 and the first brake pad 3a. The other second transmission portion 9b is disposed between the driving member carrier 7 and the second brake pad 3b. Accordingly, the second transmission protection portions 9a, 9b allow the brake member transmission assembly to be circumferentially sealed by the second transmission protection portions 9a, 9b from an inner circumference facing towards the rotational axis R.

In operation, to apply a braking force on the first on second brake disc 2a, 2b, when the second driving member driving lever actuator piston 21 pulls the second driving member driving lever 4d in the braking direction as previously described, the driving member 4a and therefore the driving member transmission 4b affixed thereto rotates in the braking direction. Consequently the brake member transmission 6 is driven by the driving member transmission 4b in the braking direction to provide a relative rotational movement between the brake member transmission 6, specifically the respective first and second ball tracks, and the first and second balls 51a, 51b and the first and second ball retainers 5a, 5b, respectively. As the depths of the first and second ball tracks decreases with an increasing rational movement in the braking direction, the first and second balls 51a, 51b are axially moved towards that respectively assigned first and second brake pads 3a, 3b. The first and second brake pads 3a, 3b are thereby axially moved towards the respectively assigned first and second brake pads to apply a braking force thereon.

**Figure 2** is a cross-sectional view of an alternative configuration of a driving member transmission 4b' and brake member transmission members 6a', 6b'. Instead of a gear driving member transmission as previously descried, the alternative configuration provides control slide driving member transmission 4b' rationally driven via the driving member 4a'. The control slide driving member transmission 4b' is formed as a wedge, specifically an isosceles triangle, wherein the inclination of lateral control slide surfaces facing the first and second brake member transmission members 6a', 6b' and therefore an effective thickness of the control slide driving member transmission 4b' in the axial direction changes upon rotation of the of the control slide driving member transmission 4b'. The first brake member transmission member 6a is disposed between the first brake pad 3a and an effective lateral control slide surface facing towards the first brake pad 3a. The second brake member transmission member 6b is disposed between the second brake pad 3b and the other effective lateral control slide surface facing towards the second brake pad 3b.

Upon engagement of the control slide driving member transmission 4b' with the surfaces of the first and second brake member transmission members 6a', 6b' and with continued rotationally movement of the control slide driving member transmission 4b' in a direction with increasing thickness of the control slide driving member transmission 4b' in the axial direction, the first and second brake member transmission members 6a', 6b' are axially moved apart from each other. Accordingly, the first brake pad 3a is moved towards the first brake disc 2a by the first brake member transmission member 6a'. Simultaneously, the second brake pad 3b is moved towards the second brake disc 2b by the second brake member transmission member 6b'.

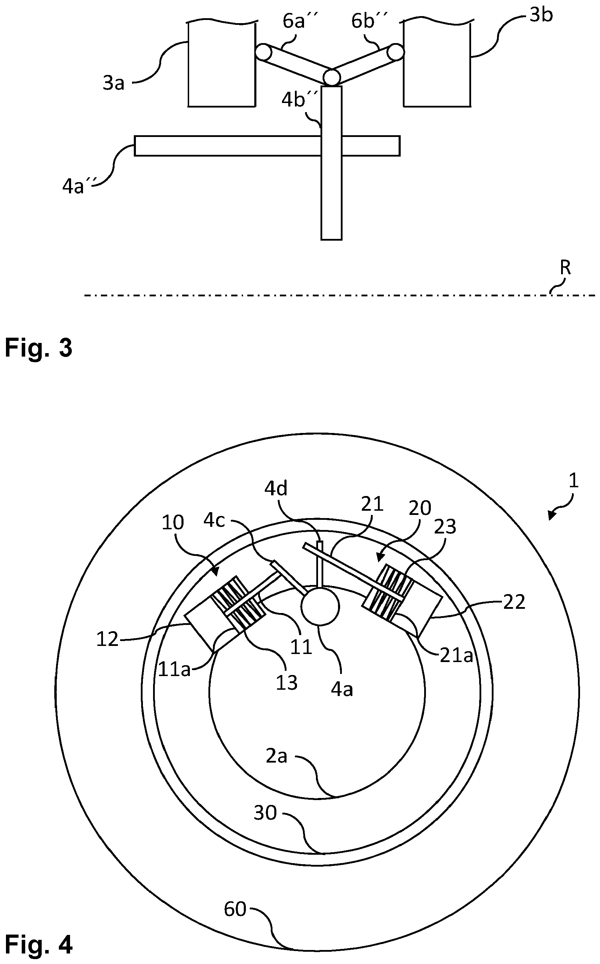

**Figure 3** is a cross-sectional view of a further alternative configuration of a driving member transmission and brake member transmission members.

Here, the driving member transmission is a cam driving member transmission 4b" and the brake member transmission assembly comprises a first brake member transmission lever 6a' and a second brake member transmission lever 6b'. The first brake member transmission lever 6a' and the second brake member transmission lever 6b' form a toggle lever or knee lever mechanism. Accordingly, the first brake member transmission lever 6a' and the second brake member transmission lever 6b' are pivotably connected to each other with one respective end thereof by a brake member transmission lever. The respective other end of the first brake member transmission lever 6a' is pivotably connected to a surface of the first brake pad 3a facing away from the first brake disc 2a. Analogously, the respective other end of the second brake member transmission lever 6b' is pivotably connected to a surface of the second brake pad 3b facing away from the second brake disc 2b. The cam driving member transmission 4b" is rotatably driven by the driving member 4a" and arrange in an axial position to be effective in a plane perpendicular to the driving member rotational axis intersecting the brake member transmission lever pivot, i.e. operatively engageable with the brake member transmission lever pivot. As the cam driving member transmission 4b" is eccentric, the effective height of the cam driving member transmission 4b" in the radial direction on the brake member transmission lever pivot changes in accordance with the rotational angle of the driving member 4a". With an increasing effective height of the cam driving member transmission 4b" on the brake member transmission lever pivot, the first brake member transmission lever 6a' and the second brake member transmission lever 6b' are spread apart from each other until the first brake member transmission lever 6a' and the second brake member transmission lever 6b' form a straight line corresponding to a dead center position of the first brake member transmission lever 6a' and the second brake member transmission lever 6b'. Upon a further increasing effective height of the of the cam driving member transmission 4b" on the brake member transmission lever pivot, the first brake member transmission lever 6a' and the second brake member transmission lever 6b' may be returned to may towards each other. However, in the exemplary embodiment, the cam driving member transmission 4b" is configured to only provide an effective height on the brake member transmission lever pivot equal to or below the dead center.

**Figure 4** is a lateral view of a brake assembly installed on a vehicle as part of a brake system with the brake assembly of Figure 1 as exemplary embodiment. The brake assembly 1 comprises the first brake disc 2a and a second brake disc 2b opposed to each other as brake members rotationally supported about a rotational axis R. The first brake disc 2a and the second brake disc 2b are attached to a wheel rim 30 supporting a tire 60. A braking member actuating assembly is stationary attached to a carrier member (not shown), i.e. is not rotated together with the first brake disc 2a and the second brake disc 2b. The braking member actuating assembly comprises the driving member 4a rotatably supported about the driving member rotational axis extending in parallel to the rotational axis R. The driving member 4a extends as a shaft in a space within the wheel rim 30 along the driving member rotational axis. Further, the braking member actuating assembly comprises a first driving member driving lever 4c and a second driving member driving lever 4d in a constant positional relationship to each other. The first driving member driving lever 4c and the second driving member driving lever 4d are integrally formed with the driving member 4a such that the respective driving member driving lever rotational axes are coaxially arranged with the driving member rotational axis. In other embodiments, the first driving member driving lever 4c and/or the second driving member driving lever 4d may be separate members attached to the driving member 4a instead of being integrally formed therewith and/or the respective driving member driving lever rotational axes may be offset from the driving member rotational axis. Here, the first driving member driving lever 4c and the second driving member driving lever 4d extend radially from the driving member 4a to form an acute angle therebetween.

To rotate the driving member 4a about the driving member rotational axis by the first driving member driving lever 4c, the first driving member driving lever 4c is actuatable by a first driving member driving lever actuating assembly 10, here a piston actuator. The first driving member driving lever actuating assembly 10 as piston actuator comprises a first driving member driving lever actuator piston 11 as first driving member driving lever actuator extending in a translational movement direction to actuate the first driving member driving lever 4c. The first driving member driving lever actuator piston 11 comprises a first driving member driving lever actuator piston area 11a extending in circumferentially in a radial direction with respect to the translational movement direction of the first driving member driving lever actuator piston 11 or the axial extension of the first driving member driving lever actuator piston 11, respectively. The first driving member driving lever actuator piston area 11a guides the first driving member driving lever actuator piston 11 within a first driving member driving lever actuator piston cylinder 12 of the first driving member driving lever actuating assembly 10 in the translational movement direction. Further, the first driving member driving lever actuator piston area 11a separates the interior volume of the first driving member driving lever actuator piston cylinder 12 into a first volume surrounding the first driving member driving lever actuator piston 11 to the extent received by the first driving member driving lever actuator piston cylinder 12 and a second volume between the surface of the first driving member driving lever actuator piston area 11a facing away from the first driving member driving lever actuator piston 11 in the translational movement direction. The first driving member driving lever actuating assembly 10 further comprises a first driving member driving lever actuator spring member 13 as first driving member driving lever actuator biasing member. In the exemplary embodiment, the first driving member driving lever actuator spring member 13 is a compression spring arranged in the first volume and acting in the translational movement direction to bias the first driving member driving lever actuator piston 11 in a retracted position, in which the end of the first driving member driving lever actuator piston 11 opposed to the first driving member driving lever actuator piston area 11a in the translational movement direction is closer to the first driving member driving lever actuator piston cylinder 12 as in an extended position. The end of the first driving member driving lever actuator piston 11 opposed to the first driving member driving lever actuator piston area 11a in the translational movement direction is hinged to the first driving member driving lever 4c.

To rotate the driving member 4a about the driving member rotational axis by the second driving member driving lever 4d, the second driving member driving lever 4d is actuatable by a second driving member driving lever actuating assembly 20, here also configured as piston actuator. The functional and constructive principles of the first driving member driving lever actuating assembly 10 also apply on the second driving member driving lever actuating assembly 20. Accordingly, the second driving member driving lever actuating assembly 20 comprises a second driving member driving lever actuator piston 21 with a second driving member driving lever actuator piston area 21a to be guided in a second driving member driving lever actuator piston cylinder 22 and a first driving member driving lever actuator spring member 23 as second driving member driving lever actuator biasing member. The description of the respective components of the first driving member driving lever actuating assembly 10 also applies to the respective components of the second driving member driving lever actuating assembly 20 to the extent not described otherwise or contrary to given explanations. For example, as exemplary variant, the second driving member driving lever actuator piston 21 is not hinged to the second driving member driving lever 4d but comprises a catch to engage with the second driving member driving lever 4d.

The second driving member driving lever actuating assembly 20 is arranged opposed to the first driving member driving lever actuating assembly 10 with respect to the first driving member driving lever 4c and the second driving member driving lever 4d, respectively. In other words, the translational movement directions of the first driving member driving lever actuator piston 11 and the second driving member driving lever actuator piston 21 are intersecting each other, here with an angle of less than 180° open to the rotational axis R.

In operation, with a braking direction corresponding to a clockwise rotation of the driving member 4a, a braking operation by the first driving member driving lever actuating assembly 10 is executed by pressurizing the second volume of the first driving member driving lever actuator piston cylinder 12 up to a resulting force on the first driving member driving lever actuator piston area 11a exceeding the counter force by the first driving member driving lever actuator spring member 13. Accordingly, the first driving member driving lever actuator piston 11 is moved in the extracted position, thereby pushing the first driving member driving lever 4c away from the first driving member driving lever actuator piston cylinder 12 to rotate the driving member 4a in the braking direction, i.e. here clockwise. The described configuration corresponds to an active braking concept.

With respect to the second driving member driving lever actuating assembly 20, rotating the driving member 4a in the braking direction is accomplished by pulling the second driving member driving lever 4d clockwise towards the second driving member driving lever actuator piston cylinder 22 by the second driving member driving lever actuator spring member 23 with resulting force of a pressurization of the second volume of the second driving member driving lever actuator piston cylinder 22 being below the counter force of the second driving member driving lever actuator spring member 23. The described configuration corresponds to a passive braking concept.

To release an applied braking force on the brake discs 2a, 2b the driving member 4a has to be rotated in a rotational direction opposite to the braking direction, i.e. a release direction, here a counterclockwise rotational direction as opposite to the clockwise braking direction. To rotate the driving member 4a in the release direction to release an applied braking force by the first driving member driving lever actuating assembly 10, the pressure in the second volume is reduced at least up to a resulting force below the counter force of the first driving member driving lever actuator spring member 13. Accordingly, the first driving member driving lever actuator spring member 13 can expand to move the first driving member driving lever actuator piston 11 in the retracted position. The first driving member driving lever 4c is thereby pulled by the first driving member driving lever actuator piston 11 towards the first driving member driving lever actuator piston cylinder 12 to rotate the driving member 4a in the release direction, i.e. here counterclockwise.

With respect to the second driving member driving lever actuating assembly 20, rotating the driving member 4a in the release direction is accomplished by pushing the second driving member driving lever 4d counterclockwise away from the second driving member driving lever actuator piston cylinder 22 by pressurizing the second volume of the second driving member driving lever actuator piston cylinder 22 up to a resulting force on the second driving member driving lever actuator piston area 21a exceeding the counter force by the second driving member driving lever actuator spring member 23. Accordingly, the second driving member driving lever actuator piston 21 is moved in the extracted position, thereby pushing the second driving member driving lever 4d away from the second driving member driving lever actuator piston cylinder 22 to rotate the driving member 4a in the release direction, i.e. here counterclockwise.

The first driving member driving lever actuating assembly 10 may be applied for service brake operations, while the second driving member driving lever actuating assembly 20 may be applied for parking brake operations. However, the first driving member driving lever actuating assembly 10 and the second driving member driving lever actuating assembly 20 may be used simultaneously to jointly support a braking and/or release operation and/or in series. For example, the latter may provide a parking brake operation with the first driving member driving lever actuating assembly 10 executing a braking operation and the second driving member driving lever actuating assembly 20 is only actuated to provide an continued further movement of the driving member 4a in the braking direction and/or to hold the driving member 4a in the respective braking position.

The invention has been described with respect to an exemplary embodiments. However, the invention is not limited to the exemplary embodiments.

### LIST OF REFERENCE SIGNS

- 1: brake assembly
- 2: brake disc assembly (brake member assembly)
- 2a: first brake disc (first brake member)
- 2b: second brake disc (second brake member)
- 2c: connecting member
- 3a: first brake pad (first braking member)
- 3b: second brake pad (second braking member)
- 4a, 4a', 4a": driving member (brake member transmission assembly driving assembly)
- 4b: gear driving member transmission (brake member transmission assembly driving assembly)
- 4b': control slide driving member transmission (brake member transmission assembly driving assembly)
- 4b": cam driving member transmission (brake member transmission assembly driving assembly)
- 4c: first driving member driving lever
- 4d: second driving member driving lever
- 5a: first ball retainer (brake member transmission assembly)
- 5b: second ball retainer (brake member transmission assembly)
- 51a: first ball (brake member transmission assembly)
- 51b: second ball (brake member transmission assembly)
- 6: brake member transmission (brake member transmission assembly)
- 6a': first brake member transmission member (brake member transmission assembly)
- 6b': second brake member transmission member (brake member transmission assembly)
- 6a": first brake member transmission lever (brake member transmission assembly)
- 6b": second brake member transmission lever (brake member transmission assembly)
- 7: driving member carrier
- 8: first transmission protection portion
- 9a, 9b: second transmission protection portion
- 10: first driving member driving lever actuator assembly
- 11: first driving member driving lever actuator piston (first driving member driving lever actuator)
- 11a: first driving member driving lever actuator piston area
- 12: first driving member driving lever actuator piston cylinder
- 13: first driving member driving lever actuator spring member (first driving member driving lever actuator biasing member)
- 20: second driving member driving lever actuator assembly
- 21: second driving member driving lever actuator piston (first driving member driving lever actuator)
- 21a: second driving member driving lever actuator piston area
- 22: second driving member driving lever actuator piston cylinder
- 23: second driving member driving lever actuator spring member (first driving member driving lever actuator biasing member)
- 30: wheel rim
- 60: tire
- R: rotational axis

## Claims

1. Brake assembly (1), comprising:
a brake member assembly (2) comprising a first brake member (2a) and a second brake member (2b), each of the first brake member (2a) and the second brake member (2b) being rotationally supported about a rotational axis (R) and opposed to each other in the axial direction with respect to the rotational axis (R),
at least one first braking member (3a) arranged on a radial surface side of the first brake member (2a) with respect to the rotational axis (R),
at least one second braking member (3b) arranged on a radial surface side of the second brake member (2b) with respect to the rotational axis (R),
at least one brake member transmission assembly (5a, 5b, 51a, 51b, 6, 6a', 6b', 6a", 6b") configured to move a surface of the at least one first braking member (3a) facing the radial surface of the first brake member (2a) towards the radial surface of the first brake member (2a) and a surface of the at least one second braking member (3b) facing the radial surface of the second brake member (2b) towards the radial surface of the second brake member (2b), and
at least one brake member transmission assembly driving assembly (4a, 4a', 4a", 4b, 4b', 4b"),
wherein the at least one brake member transmission assembly driving assembly (4a, 4a', 4a", 4b, 4b', 4b") is configured to drive the at least one brake member transmission assembly (5a, 5b, 51a, 51b, 6, 6a', 6b', 6a", 6b") for a bidirectionally driven axial movement of the surface of the at least one first braking member (3a) facing the radial surface of the first brake member (2a) towards the radial surface of the first brake member (2a) and the surface of the at least one second braking member (3b) facing the radial surface of the second brake member (2b) towards the radial surface of the second brake member (2b).

2. The brake assembly (1) according to claim 1, wherein the at least one brake member transmission assembly driving assembly (4a, 4a', 4a", 4b, 4b', 4b") is at least partially axially arranged between the first brake member (2a) and the second brake member (2b) with respect to the rotational axis (R).

3. The brake assembly (1) according to claim 1 or 2, wherein, in the axial direction with respect to the rotational axis (R), the at least one first braking member (3a) is arranged between the at least one brake member transmission assembly (5a, 5b, 51a, 51b, 6, 6a', 6b', 6a", 6b") and the first brake element (2a), and the at least one second braking member (3b) is arranged between the at least one brake member transmission assembly (5a, 5b, 51a, 51b, 6, 6a', 6b', 6a", 6b") and the second brake element (2b).

4. The brake assembly (1) according to any one of the preceding claims, wherein the at least one brake member transmission assembly (5a, 5b, 51a, 51b, 6, 6a', 6b', 6a", 6b") is configured to convert a rotational movement of the at least one brake member transmission assembly driving assembly (4a, 4a', 4a", 4b, 4b', 4b") into a bidirectional translational axial movement of the surface the at least one first braking member (3a) facing the radial surface of the first brake member (2a) towards the radial surface of the first brake member (2a) and the surface of the at least one second braking member (3b) facing the radial surface of the second brake member (2b) towards the radial surface of the second brake member (2b).

5. The brake assembly (1) according to claim 4, wherein the at least one brake member transmission assembly (5a, 5b, 51a, 51b, 6) comprises a bidirectional ball-ramp transmission mechanism, comprising at least one first ball (51a) and at least one second ball (51b) wherein, in the axial direction with respect to the rotational axis (R), the at least one first ball (51a) is arranged between a brake member transmission (6) and the at least one first braking member (3a), and the at least one second ball (51b) is arranged between the brake member transmission (6) and the at least one second braking member (3b), and wherein the surface of the brake member transmission (6) facing the at least one first ball (51a) and/or the surface of the at least one first braking member (3a) facing the at least first ball (51a), and the surface of the brake member transmission (6) facing the at least one second ball (51b) and/or the surface of the at least one second braking member (3a) facing the at least second ball (51b) provide(s) a ball track.

6. The brake assembly (1) according to claim 5, wherein the at least one brake member transmission assembly (5a, 5b, 51a, 51b, 6) comprises at least one first ball retainer (5a) retaining the at least one first ball (51a), and at least one second ball retainer (5b) retaining the at least one second ball (51b), wherein, in the axial direction with respect to the rotational axis (R), the at least one first ball retainer (5a) is arranged between the brake member transmission (6) and the at least one first braking member (3a), and the at least one second ball retainer (5b) is arranged between the brake member transmission (6) and the at least one second braking member (3b).

7. The brake assembly (1) according to claim 5 or 6, wherein the at least one first ball retainer (5a) and/or the at least one first ball (51a) is axially moveable with respect to the rotational axis (R), and the at least one second ball retainer (5b) and/or the at least one second ball (51b) is axially moveable with respect to the rotational axis (R).

8. The brake assembly (1) according to claim 6 or 7, wherein the at least one brake member transmission assembly driving assembly (4a, 4a', 4a", 4b, 4b', 4b") is configured to drive the brake member transmission (6) and/or the at least one first ball retainer (5a) in a circumferential direction with respect to the rotational axis (R), preferably coaxially about the rotational axis (R), to provide a relative movement between the brake member transmission (6) and the at least one first ball retainer (5a), and wherein the at least one brake member transmission assembly driving assembly (4a, 4a', 4a", 4b, 4b', 4b") is configured to drive the brake member transmission (6) and/or the at least one second ball retainer (5b) in a circumferential direction with respect to the rotational axis (R), preferably coaxially about the rotational axis (R), to provide a relative movement between the brake member transmission (6) and the at least one second ball retainer (5b).

9. The brake assembly (1) according to any one of the preceding claims, wherein the at least one brake member transmission assembly driving assembly (4a, 4a', 4a", 4b, 4b', 4b") comprises at least one driving member (4a, 4a', 4a") and at least one driving member transmission (4b, 4b', 4b") rotationally driven by the at least one driving member (4a, 4a', 4a"), preferably about a driving member rotational axis substantially in parallel with the rotational axis (R).

10. The brake assembly (1) according to claim 9, wherein the at least one driving member (4a, 4a', 4a") extends beyond the first brake member (2a) and/or the second brake member (2b) in the axial direction with respect to the rotational axis (R).

11. The brake assembly (1) according to claim 9 or 10, wherein the brake assembly (1) comprises at least one driving member driving lever (4c, 4d) configured to drive the driving member (4a, 4a', 4a"), wherein the at least one driving member driving lever (4c, 4d) is preferably actuated by a pneumatic, hydraulic or electro-mechanic actuator.

12. The brake assembly (1) according to any one of the claims 9 to 11, wherein the at least one driving member transmission (4b, 4b', 4b") comprises a gear driving member transmission (4b), a control slide driving member transmission (4b') or a cam driving member transmission (4b").

13. The brake assembly (1) according to claim 12, wherein the at least one driving member transmission (4b, 4b', 4b") is the gear driving member transmission (4b) and configured to provide the relative movement between the brake member transmission (6) and the at least one first ball retainer (5a) and the brake member transmission (6) and the at least one second ball retainer (5b) according to claim 8, and/or to provide the relative movement between the at least one first ball retainer (5a) and the at least one first braking member (3a) and the at least one second ball retainer (5b) and the at least one second braking member (3b) according to claim 8.

14. The brake assembly (1) according to claim 12, wherein the at least one driving member transmission (4b, 4b', 4b") is the control slide driving member transmission (4b') with lateral control slide surfaces extending in the radial direction, and wherein preferably the at least one brake member transmission assembly (6a', 6b') comprises a first brake member transmission member (6a) to be movable in the axial direction with respect to the rotational axis (R) towards the first braking member (3a) and a second brake member transmission member (6b) to be movable in the axial direction with respect to the rotational axis (R) towards the second braking member (3b) depending on a rotational angle of the control slide driving member transmission (4b').

15. The brake assembly (1) according to claim 12, wherein the at least one driving member transmission (4b, 4b', 4b") is the cam driving member transmission (4b") and the at least one brake member transmission assembly (6a", 6b") comprises a first brake member transmission lever (6a") configured to actuate the first braking member (3a) and a second brake member transmission lever (6b") configured to actuate the second braking member (3b) depending on a rotational angle of the cam driving member transmission (4b").

16. The brake assembly (1) according to any of the proceeding claims, wherein the brake assembly (1) comprises at least one first transmission protection portion (8) arranged to at least partially shield the at least one brake member transmission assembly (5a, 5b, 51a, 51b, 6, 6a', 6b', 6a", 6b") from a contact surface of the first brake member (2a) and the first braking member (3a) and a contact surface of the second brake member (2b) and the second braking member (3b) on a side of the at least one brake member transmission assembly (5a, 5b, 51a, 51b, 6, 6a', 6b', 6a", 6b") facing away from the rotational axis (R) in the radial direction, and/or at least one second transmission protection portion (9a, 9b) to at least partially shield the at least one brake member transmission assembly (5a, 5b, 51a, 51b, 6, 6a', 6b', 6a", 6b") from a contact surface of the first brake member (2a) and the first braking member (3a) and a contact surface of the second brake member (2b) and the second braking member (3b) on a side of the at least one brake member transmission assembly (5a, 5b, 51a, 51b, 6, 6a', 6b', 6a", 6b") facing towards the rotational axis (R) in the radial direction.

17. The brake assembly (1) according to any of the proceeding claims, wherein the brake member assembly (2) further comprises a connecting member (2c) configured to connect the first brake member (2a) and the second brake member (2b) in a predetermined distance from each other in the axial direction with respect to the rotational axis (R), preferably as continuous connection over the circumferential extension of the first brake member (2a) and the second brake member (2b), more preferably at an outer circumference of the first brake member (2a) and the second brake member (2b), and wherein the connection member (2c) preferably comprises increased surface features, such as ribs, and/or the connection member (2c), the first brake member (2a) and/or the second brake member (2b) preferably comprise/comprises cooling channels.

18. Vehicle comprising a brake assembly (1) according to one of the claims 1 to 17, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.
